(19)

Europäisches
Patentamt
European
Patent Office
Office européen
des brevets

(11) **EP 1 890 347 A1**

(12) **EUROPEAN PATENT APPLICATION**

(43) Date of publication:
**20.02.2008 Bulletin 2008/08**

(51) Int Cl.:
*H01M 2/34* (2006.01)      *H01M 6/50* (2006.01)
*H01M 10/46* (2006.01)

(21) Application number: **07107695.4**

(22) Date of filing: **08.05.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **09.08.2006 US 463487**

(71) Applicant: **Honeywell International Inc.
Morristown NJ 07962 (US)**

(72) Inventors:
• **BARON, Mark A.
New Port Richey, FL 34652 (US)**
• **CALLIGAN, Laura L.
Palm Harbor, FL 34683 (US)**

(74) Representative: **Haley, Stephen
Gill Jennings & Every LLP
Broadgate House
7 Eldon Street
London EC2M 7LH (GB)**

(54) **Voltage regulator in a battery block**

(57)      An electronic system is provided. The electronic system comprises at least one electronic component and a battery block configured to provide power to the at least one electronic component. The battery block comprises at least one battery cell; a voltage regulator circuit coupled to the at least one battery cell and configured to maintain an output voltage of the battery block within operating voltage limits of the at least one electronic component; and a housing configured to house the at least one battery cell and the voltage regulator circuit.

FIG. 1

EP 1 890 347 A1

## Description

Portable power supplies, such as batteries, are commonly used in electronic systems. In addition, these portable power supplies are often used as backup power supplies in case a primary power supply is unavailable. For example, batteries in a laptop computer are used to provide power when line power via an outlet is unavailable.

A particular need for portable power supplies arises in electronic systems using static random access memory (SRAM) to store data necessary for operation of the system. One exemplary system using SRAM for storage of data is a computer guidance system in missiles. When such a system is undergoing testing or transportation from one site to another, a portable back up power supply is needed to prevent the SRAM from losing its data.

Systems, such as missile guidance systems, can have very stringent requirements. For example, such systems may require certain service life, operating hours, voltage, and resistance to nuclear weapons level interference, such as system generated electro-magnetic pulses, dose rate, long pulse, thermo-mcchanical, total dose, and single event upsets. Unfortunately, adequate power supplies which meet such requirements are not commonly available as commercial products. Hence, adequate power supplies must often be custom made. Custom made parts can be very costly compared to commercial off-the-shelf products. In addition, custom made parts can be difficult and/or costly to replace in the event a custom made part becomes unavailable.

In one embodiment, an electronic system is provided. The electronic system comprises at least one electronic component and a battery block configured to provide power to the at least one electronic component. The battery block comprises at least one battery cell; a voltage regulator circuit coupled to the at least one battery cell and configured to maintain an output voltage of the battery block within operating voltage limits of the at least one electronic component; and a housing configured to house the at least one battery cell and the voltage regulator circuit.

## IN THE DRAWINGS:

The present invention can be more easily understood and further advantages and uses thereof are more readily apparent, when considered in view of the description of the following figures in which:

Figure 1 is a high-level block diagram depicting an electronic system according to one embodiment of the present invention.

Figure 2 depicts a battery block according to one embodiment of the present invention.

Figure 3 is a schematic diagram of a voltage regulator circuit according to one embodiment of the present invention.

Figure 4 is a schematic of another voltage regulator circuit according to one embodiment of the present invention.

Figure 5 is a flow chart showing a method of supplying power to a component in an electronic system.

Like reference numbers and designations in the various drawings indicate like elements.

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. It should be understood that the exemplary method illustrated may include additional or fewer steps or may be performed in the context of a larger processing scheme. Furthermore, the method presented in the drawing figures or the specification is not to be construed as limiting the order in which the individual steps may be performed. The following detailed description is, therefore, not to be taken in a limiting sense.

Embodiments of the present invention reduce costs and increase flexibility in providing power supplies to electronic components by including a voltage regulator circuit in a battery block of a power supply. In addition, some embodiments further reduce costs by using commercially available off-the-shelf parts in a unique combination rather than custom made parts. Some embodiments of the present invention are implemented in military/aerospace applications. Commercially available off-the-shelf parts, such as voltage regulator and battery cells, were generally thought to not be capable of passing the required performance tests. Also, embodiments of the present invention increase flexibility in battery block design by enabling a variety of different battery cells to be used if a particular battery cell becomes unavailable or too costly.

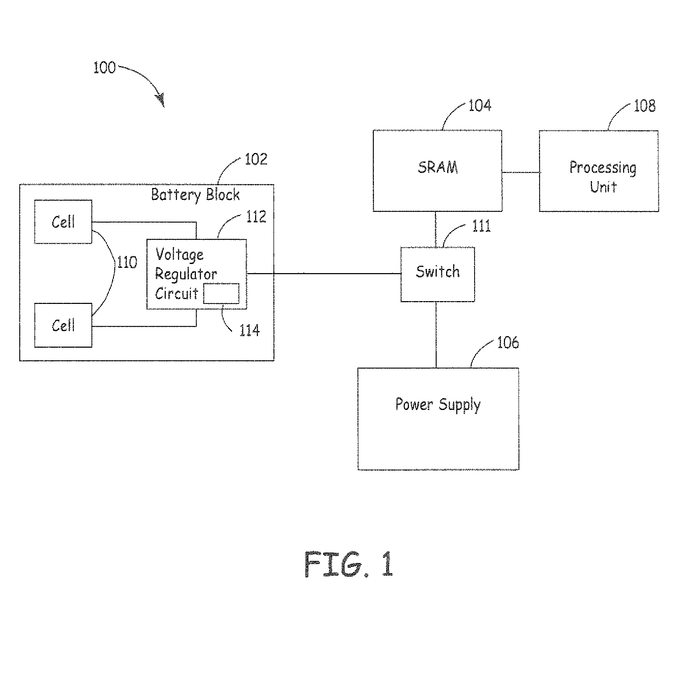

Figure 1 is a high-level block diagram depicting an electronic system 100 according to one embodiment of the present invention. System 100 includes battery block 102, component 104, and primary power supply 106. In this exemplary embodiment, system 100 is a missile guidance computer and component 104 comprises one or more static random access memory (SRAM) chips. However, in other embodiments, system 100 and component 104 comprise other types of electronic systems and components, respectively. For example, in other embodiments, other types of RAM can be used. Primary power supply 106 can be any type of power supply such as battery cells, outlet power, or a power generator, etc. Battery block 102, in this example, is a back-up power supply for periods when primary power supply 106 is not available. Switch 111 is used to determine when battery block 102 will supply power to component 104. For example, in one embodiment, switch 111 is a diode OR switch. When power from power supply 106 drops below a threshold voltage value, power from battery block 102 is conducted through switch 111 to component 104. However, it is to be understood that in other embodiments, battery block 102 is a primary power supply and power supply 106 is not included.

Battery block 102 includes one or more battery cells 110 and a voltage regulator circuit 112, In Figure 1, there are two battery cells 110. In particular, the two battery cells 110 used, in this example, are lithium sulfuryl chloride double D cells produced by Electrochem Inc., part number 3B36. Each of the two battery cells 110 has an approximate output voltage of 3.9 volts yielding a total voltage output of approximately 7.8 volts. However, embodiments of the present invention are not to be limited to any particular battery cell. In particular any appropriate number of battery cells as well as other types of battery cells can be used in other embodiments. For example, in another embodiment, four lithium manganese dioxide single D cells produced by Ultralife Batteries, Inc., part number U3356, are used. The four battery cells provide an approximate total voltage output of 6.8 volts. Battery cells 110 used in embodiments of the present invention can be off-the-shelf commercially available battery cells or custom designed battery cells.

In this example, voltage regulator circuit 112 includes a regulator 114 which has a low dropout voltage (i.e. input-output differential voltage) and low quiescent current (the current through regulator 114 with no load present). Having a low dropout voltage helps extend the life of battery cells 110 as well as reducing the required output voltage of battery cells in order to supply the proper output voltage. For example, in some embodiments of the present invention, component 104 requires a voltage level of approximately 5.5 volts. When the output voltage of battery cells exceeds the 5.5 volts (e.g. with the use of two lithium sulfuryl chloride double D cells as described above) regulator 114 reduces the voltage level to maintain the output of battery block 102 within the operating limits of component 104.

By having a low dropout voltage, regulator 114 can continue to provide the proper output voltage even as battery cells 110 are dying. An exemplary low dropout voltage is approximately 0.1 volts. However, regulators with other similar low dropout voltages can be used. Assuming an exemplary dropout voltage of 0.1 volts and a required 5.5 volts for component 104, as the output voltage of battery cells 110 begins to drop, regulator 114 can continue to provide the proper output voltage as long as the voltage from battery cells 110 remains above approximately 5.7 volts.

A low quiescent current is also beneficial in extending the life of battery cells 110. Some embodiments of the present invention require a quiescent current below 100 μA. By not consuming too much current, regulator 114 enables more Ampere hours to be used for powering component 104. An exemplary regulator 114 that is suitable for use in voltage regulator circuit 112 is the regulator LP2980-ADJ produced by National Semiconductor, Inc. The LP2980-ADJ is an off-the-shelf commercially available regulator which has a dropout voltage of approximately 0.1 volts and approximately 60-62 μA quiescent current when used in embodiments of the present invention. However, it is to be understood that other off-the-shelf or custom made regulators can be used in other embodiments. By using off-the-shelf battery cells 110 and regulator 114, embodiments of the present invention reduce costs associated with using custom made components in system 100.

In addition, by including voltage regulator circuit 112 in battery block 102, embodiments of the present invention are adaptable to use any of a plurality of off-the-shelf battery cells 110. In particular, other circuitry in system 100, such as component 104, does not have to be adapted or additional circuitry added to enable use of different battery cells. For example, if production of a particular battery cell is ceased, another off-the-shelf battery cell can be substituted into battery block 102. The change is transparent to system 100 as voltage regulator circuit 112 regulates the voltage inside battery block 102.

In operation, primary power supply 106 provides power to component 104. In this example, component 104 is a plurality of SRAM chips which other circuitry (e.g. processing unit 108) can write data to and/or read data from. Power supplied from primary power supply 106 refreshes the data on component 104 to prevent data loss. When primary power supply 106 is unavailable, such as during transport or maintenance of system 100, battery block 102 provides power to component 104 to refresh data in component 104, thereby preventing data loss.

In particular, battery cells 110 provide power to voltage regulator circuit 112. Since, battery cells 110, in this embodiment, output a voltage which is too high for component 104, regulator 114 of voltage regulator circuit 112 regulates the voltage from battery cells 110 to keep the voltage output from battery block 102 within operating voltage limits of component 104 in system 100. Hence, data on component 104 is not lost even during periods when primary power supply 106 is unavailable. In addition, in this embodiment, voltage regulator circuit 112 maintains the voltage output from battery block 102 sufficiently low that battery energy is not consumed when primary power supply 106 is available. For example, in one embodiment, voltage regulator circuit 112 maintains the output voltage at 5.5 volts ± 50 millivolts. This increases the life of battery cells 110 by only consuming power when needed. In particular, in some embodiments, battery cells 110 and voltage regulator circuit 112 are adapted to obtain a service life of 10 years and the ability to supply the proper voltage for at least 76 days during those 10 years.

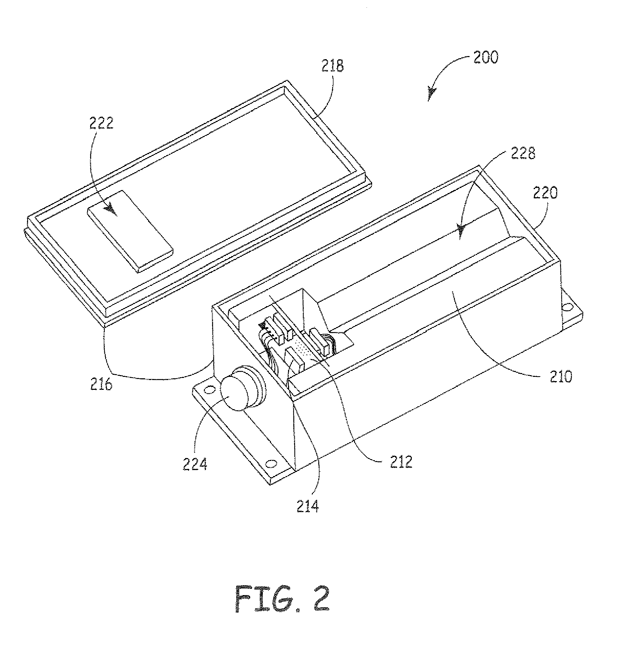

Figure 2 depicts a battery block 200 according to one embodiment of the present invention. Battery block 200 includes a housing 216 comprised of a lid 218 and a base 220. Lid 218 includes a pressure pad 222 to protect voltage regulator circuit 212. As described above, voltage regulator circuit 212 is configured to maintain an output voltage of battery block 200 via connector 224 within the operating voltage limits of a component (such as component 104 in Fig. 1) coupled to battery block 200.

Voltage regulator circuit 212 is located inside housing 216 which enables the switching of battery cells 210 without the need to modify components coupled to battery block 200. Voltage regulator circuit 212 is radiation hardened in this example to pass various performance tests, such as dose rate, long pulse, thermo-mechanical, total dose, and single event upset evaluations. In addition, a commercially available off-the-shelf regulator 214 is used in one embodiment of voltage regulator circuit 212 in Fig. 2. It is preferable for regulator 214 to have a low dropout voltage and low quiescent current as described above. One example of a suitable off-the-shelf regulator 214 which has a low dropout voltage and low quiescent current is regulator LP2980-ADJ produced by National Semiconductor, Inc. However, it is to be understood that other off-the-shelf and custom made regulators can be used in other embodiments.

Battery cells 210 are coupled to voltage regulator circuit 212. Battery cells 210 are potted (e.g. encapsulated in plastic) to protect the cells from the environment, in this example. In particular, two commercially available off-the-shelf battery cells are used in this example. However, it is to be understood that other appropriate numbers of battery cells are used in other embodiments. Exemplary battery cells include lithium sulfuryl chloride double D cells produced by Electrochem Inc., part number 3B36; and lithium manganese dioxide single D cells produced by Ultralife Batteries, Inc., part number U3356. Additionally, potted battery cells 210 have a gap 228 removed from the plastic to reduce weight, in this example.

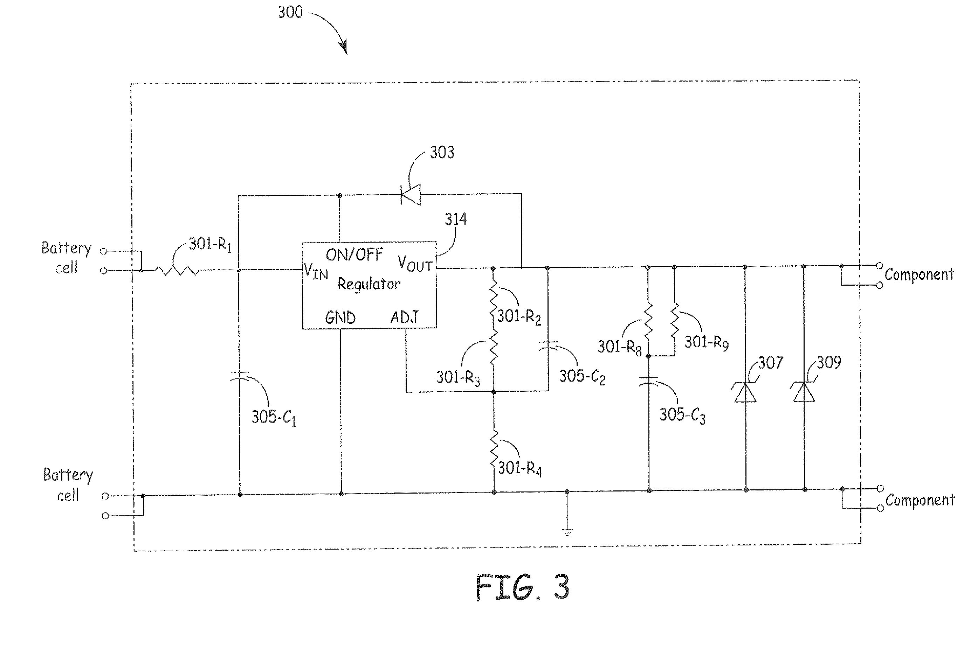

Figure 3 is a schematic diagram of a voltage regulator circuit 300 according to one embodiment of the present invention. Voltage regulator circuit 300 is one embodiment of a voltage regulator circuit 112 in Fig. 1 configured for use with two battery cells, e.g. two lithium sulfuryl chloride double D cells produced by Electrochem Inc., which provide a total input voltage of about 7.8 volts, In addition, voltage regulator circuit 300 is configured for use with regulator 314 produced by National Semiconductor, Inc., part number LP2980-ADJ. Resistor 301-R1, diode 303, diode 307, and tranzorb 309 are included to radiation harden voltage regulator circuit 300.

Resistor 301-R1 controls the current level from battery cells (not shown) coupled to voltage regulator circuit 300. The resistive value of resistor 301-R1 can be adapted based on the desired current levels of various embodiments. Resistor 301-R1 is added to protect the battery cells and components coupled to voltage regulator circuit 300 as well as voltage regulator circuit 300 itself. Resistor 301-R1 limits the current in both directions in the event of a short circuit. For example, if regulator 314 shorts, resistor 301-R1 limits the current going into the battery cells in a radiation environment. Similarly, resistor 301-R1 limits the current to prevent excessive current from entering regulator 314. In one embodiment of Fig. 3, resistor 301-R1 has a resistive value of 51.1 ohms which limits the current to approximately 150 mAmps, assuming an input voltage of about 8 volts.

Diode 303 is placed in voltage regulator circuit 300 to replicate a diode in regulator 314 (not shown) biased in the same direction. Diode 300 is configured to prevent the diode inside regulator 314 from becoming forward biased by breaking down at a lower voltage than the diode inside regulator 314. Hence, radiation induced current, such as system generated electromagnetic pulses, is conducted by diode 300 and bypasses regulator 314. The radiation induced current is then dissipated in battery cells coupled to voltage regulator circuit 300.

Capacitors 305-C1, 305-C2, and 305-C3, are needed for operation of regulator 314 in this example. In particular, regulator 314 (LP2980-ADJ) requires input capacitor 305-C1 with a minimum capacitance at or above 1 $\mu$F and output capacitor 305-C3 with a minimum capacitance at or above 2.2 $\mu$F for proper function of regulator 314. Capacitor 305-C2 is a required feed-forward capacitor which provides the lead compensation necessary for loop stability in regulator 314. In commercial applications, capacitors 305-C1, 305-C2, and 305-C3 can be tantalum or ceramic capacitors. However, to protect voltage regulator circuit 300 in embodiments operating in high radiation environments, such as in military/aerospace applications, ceramic capacitors are used. Also, capacitors 305-C1 and 305-C3 are "stack caps" in this example, i.e. a plurality of capacitors stacked into one part. Exemplary values for capacitors 305-C1, 305-C2, and 305-C3 used in this example are 1.8 microfarads, 6.8 picofarads, and 6.8 microfarads, respectively.

In addition, when capacitor 305-C3 is a ceramic capacitor, resistors 301-R8 and 301-R9 are used to provide an equivalent series resistance with capacitor 305-C3 to reduce oscillations in the output of regulator 314. In some embodiments, resistors 301-R8 and 301-R9 are not needed, such as when a tantalum capacitor is used. Two resistors 301-R8 and 301-R9 are used in this example to enable precise control over the resistance level. In this example, each of resistors 301-R8 and 301-R9 has a value of 5.62 ohms providing an equivalent series resistance of 2.81 ohms. Although two resistors, 301-R8 and 301-R9, are used in this example to provide an appropriate equivalent series resistance, it is to be understood that any number of resistors which provides the appropriate equivalent series resistance can be used in other embodiments.

The output voltage of regulator 314 is determined by the values of resistors 301-R2, 301-R3, and 301-R4. Resistors 301-R2, 301-R3, and 301-R4 function as a voltage divider to adjust the output of regulator 314. Using two resistors 301-R2 and 301-R3 enables more precise control over the resistance level than using only one resistor. Hence, more precise control over the output voltage is also enabled. In particular, in this embodiment, the output voltage is controlled to 5.5 volts $\pm$ 50 millivolts. Although two resistors, 301-R2 and 301-R3, are used in this example to provide an appropriate equivalent series resistance, it is to be understood that any number of resistors which provides a desired equivalent series resistance can be used in other embodiments. In embodiments where regulator 314 is an LP2980 regulator, the voltage output is given by the equation:

$$V_{out} = 1.23 + 1.23\left(\frac{R_{ADJ}}{R4}\right),$$

where $R_{ADJ}$ is the equivalent series resistance of resistors 301-R2 and 301-R3, and R4 is the value of resistor 301-R4,

Exemplary values of resistors 301-R2, 301-R3, and 301-R4 are 160 kilo Ohms, 26.7 kilo Ohms, and 51.1 kilo Ohms, respectively. However, it is to be understood that other values can be used in other embodiments.

To protect components coupled to voltage regulator circuit 300, zener diode 307 is used and adapted to clamp the output voltage of voltage regulator circuit 300 to a maximum voltage. In this example, zener diode 307 clamps the output voltage to 6.8 volts. If voltage regulator 314 fails or shorts, zener diode 307 prevents excessive voltage from being output from voltage regulator circuit 300. In addition, transzorb 309 is included for additional protection. Tranzorb 309 is a transient voltage suppression diode adapted to protect voltage regulator circuit 300 from high current surges by pulling the current down to acceptable levels. In this embodiment, transzorb 309 has a value of 8.2 volts.

Despite the use of an off-the-shelf regulator 314, voltage regulator circuit 300 passes various performance tests required for military/aerospace applications. For example, voltage regulator circuit 300 passes dose rate, long pulse, thermo-mechanical, total dose, and single event upset evaluations. Therefore, embodiments of the present invention reduce costs while meeting military performance requirements with a radiation hardened, commercially available, off-the-shelf regulator 314.

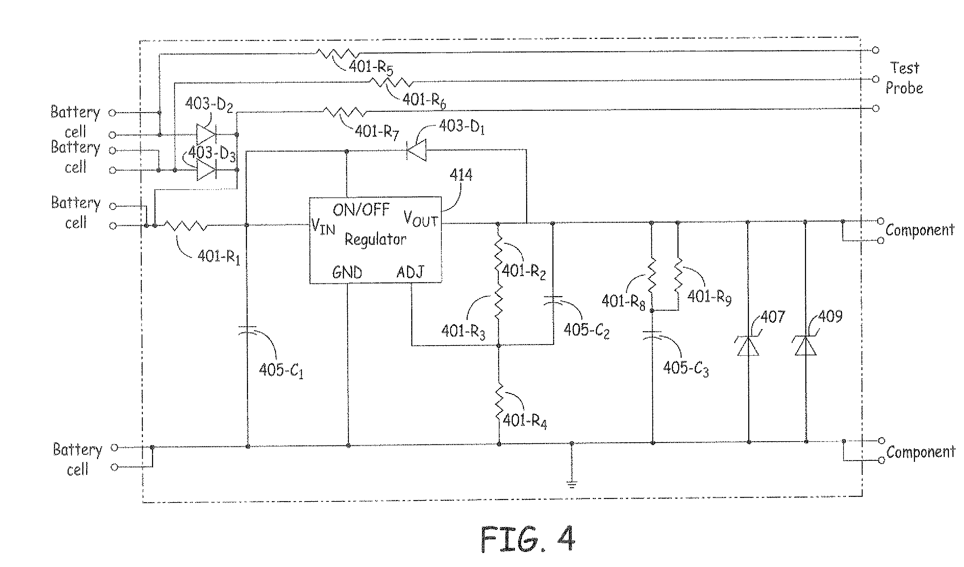

Figure 4 is a schematic of another voltage regulator circuit 400 according to one embodiment of the present invention. Voltage regulator circuit 400 is one embodiment of a voltage regulator circuit 112 in Fig. 1 configured for use with four battery cells, e.g. four lithium manganese dioxide single D cells produced by Ultralife Batteries, Inc, which provide a total input voltage of about 6 volts. In addition, voltage regulator circuit 400 is configured for use with regulator 414, produced by National Semiconductor, Inc., part number LP2980-ADJ. Resistor 401-R1, diode 403-D1, diode 407, and tranzorb 409 are included to radiation harden voltage regulator circuit 400.

Resistor 401-R1 in Fig. 4 controls the current level from battery cells (not shown) coupled to voltage regulator circuit 400. The resistive value of resistor 401-R1 can be adapted based on the desired current levels of various embodiments. Resistor 401-R1 is added to protect the battery cells and components coupled to voltage regulator circuit 400 as well as voltage regulator circuit 400 itself. Resistor 401-R1 limits the current in both directions in the event of a short circuit. For example, if regulator 414 shorts, resistor 401-R1 limits the current going into the battery cells in a radiation environment. Similarly, resistor 401-R1 limits the current to prevent excessive current from entering regulator 414. In one embodiment of Fig. 4, resistor 401-R1 has a resistive value of 51.1 ohms which limits the current to approximately 115 mAmps, assuming an input voltage of about 6 volts.

Diode 403-D1 is placed in voltage regulator circuit 400 to replicate a diode in regulator 414 (not shown) in the same direction. Diode 400 is configured to prevent the diode inside regulator 414 from becoming forward biased by breaking down at a lower voltage than the diode inside regulator 414. Hence, radiation induced current, such as system generated electromagnetic pulses, is conducted by diode 400 and bypasses regulator 414. The radiation induced current is then dissipated in battery cells coupled to voltage regulator circuit 400.

Capacitors 405-C1, 405-C2, and 405-C3, are needed for operation of regulator 414 in this example. In particular, regulator 414 (LP2980-ADJ) requires input capacitor 405-C1 with a minimum capacitance at or above 1 $\mu$F and output capacitor 405-C3 with a minimum capacitance at or above 2.2 $\mu$F for proper function of regulator 414. Capacitor 405-C2 is a required feed-forward capacitor which provides the lead compensation necessary for loop stability in regulator 414. In commercial applications, capacitors 405-C1, 405-C2, and 405-C3 can be tantalum or ceramic capacitors. However, to protect voltage regulator circuit 400 in embodiments operating in high radiation environments, such as in military/aerospace applications, ceramic capacitors are used. Also, capacitors 405-C1 and 405-C3 are "stack caps" in this example, i.e. a plurality of capacitors stacked into one part. Exemplary values for capacitors 405-C1, 405-C2, and 405-C3 used in this example are 1.8 microfarads, 6.8 picofarads, and 6.8 microfarads, respectively.

In addition, when capacitor 405-C3 is a ceramic capacitor, resistors 401-R8 and 401-R9 are used to provide an equivalent series resistance with capacitor 405-C3 to reduce oscillations in the output of regulator 314. In some embodiments, resistors 301-R8 and 301-R9 are not needed, such as when a tantalum capacitor is used.

Although two resistors, 401-R8 and 401-R9, are used in this example to provide an appropriate equivalent series resistance, it is to be understood that any number of resistors which provides the appropriate equivalent series resistance can be used in other embodiments. The output voltage of regulator 414 is determined by the values of resistors 401-R2, 401-R3, and 401-R4. Resistors 401-R2, 401-R3, and 401-R4 function as a voltage divider to adjust the output of regulator 414. Using two resistors 401-R2 and 401-R3 enables more precise control over the resistance level than using only one resistor. Hence, more precise control over the output voltage is also enabled. In particular, in this embodiment, the output voltage is controlled to 5.5 volts $\pm$ 50 milliVolts. Although two resistors, 401-R2 and 401-R3, are used in this example to provide an appropriate equivalent series resistance between $V_{out}$ and the ADJ pin, it is to be understood that any number of resistors which provides the appropriate equivalent series resistance can be used in other embodiments. In embodiments where regulator 414 is an LP2980 regulator, the voltage output is given by the equation:

$$V_{out} = 1.23 + 1.23\left(\frac{R_{ADJ}}{R4}\right),$$

where $R_{ADJ}$ is the equivalent series resistance of resistors 401-R2 and 401-R3, and R4 is the value of resistor 401-R4.

Exemplary values of resistors 401-R2, 401-R3, and 401-R4 are 160 kilo Ohms, 26.7 kilo Ohms, and 51.1 kilo Ohms, respectively. However, it is to be understood that other values can be used in other embodiments.

To protect components coupled to voltage regulator circuit 400, zener diode 407 is adapted to clamp the output voltage of voltage regulator circuit 200 to a maximum voltage. In this example, zener diode 407 clamps the output voltage to 6.8 volts. If voltage regulator 414 fails or shorts, zener diode 407 prevents excessive voltage from being output from voltage regulator circuit 400. In addition, transzorb 409 is included for additional protection. Transzorb 409 is a transient voltage suppression diode adapted to protect voltage regulator circuit 400 from high current surges by pulling the current down to acceptable levels. In this embodiment, transzorb 409 has a value of 8.2 volts.

Circuit 400 also includes resistors 401-R5, 401-R6, and 401-R7. Resistors 401-R5, 401-R6, and 401-R7 are optional and enable a test probe to couple to voltage regulator circuit 400 to determine the output voltage of battery cells prior to being regulated by regulator 414 in voltage regulator circuit 400. An exemplary value for each of resistors 401-R5, 401-R6 and 401-R7 is 100 kilo Ohms. However, it is to be understood that other values may be used in other embodiments.

Diodes 403-D2 and 403-D3 are used in voltage regulator circuit 400 to prevent battery cells coupled in parallel to voltage regulator circuit 400 from charging one another. Since the voltages from each battery cell may not be identical, one battery cell may begin charging the other battery cell coupled in parallel. Diodes 403-D2 and 403-D3 prevent such charging and enable proper load sharing.

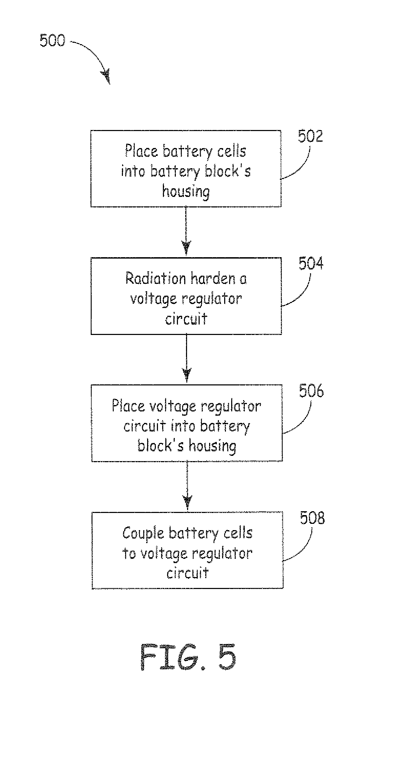

Figure 5 is a flow chart showing a method 500 of manufacturing a battery block. Method 500 can be used to manufacture a battery block for use in supplying back-up or primary power to a component (such as component 104 in Fig. 1). For example, in this embodiment, method 500 is used to manufacture a battery block for use in supplying back-up power to SRAM chips in a missile guidance computer to prevent data loss when a primary power supply is unavailable.

At 502, at least one battery cell (such as battery cells 110) is placed into a battery block's housing (such as battery block 200). In this example, two battery cells are placed in the battery block's housing. However, other appropriate numbers of battery cells are used in other embodiments. In addition, in this example, the two battery cells are commercially available off-the-shelf battery cells, such as lithium sulfuryl chloride double D cells produced by Electrochem Inc.

At 504, a voltage regulator circuit (such as voltage regulator circuit 112) is optionally radiation hardened. Radiation hardening the voltage regulator circuit to pass military/aerospace performance tests enables the voltage regulator circuit to be used in military/aerospace applications. Some examples of military performance tests used to evaluate the radiation hardened voltage regulator circuit include, but are not limited to, dose rate, long pulse, thermo-mechanical, total dose, and single event upset evaluations. Such radiation hardening is accomplished in some embodiments by including diodes to clamp the output voltage and/or current (e.g. diode 407 and tranzorb 409). In addition, in some embodiments, one or more resistors are included to limit current in the voltage regulator circuit (e.g. resistor 301-R1).

At 506, the voltage regulator circuit is placed into the battery block's housing. The voltage regulator circuit can include either a commercially available off-the-shelf regulator or a custom made regulator. For example, in this embodiment, the voltage regulator circuit includes a commercially available regulator produced by National Semiconductor, Inc., part number LP2980-ADJ. By using an off-the-shelf regulator, costs associated with the voltage regulator circuit are reduced.

At 508, the battery cells are coupled to the voltage regulator circuit. The voltage regulator circuit is configured to maintain the voltage output from the battery block within operating voltage limits of the electronic component coupled to the battery block. By placing the voltage regulator circuit inside the battery block, embodiments of the present invention enable the battery cells to be replaced by different battery cells without modifying the electronic component or other circuitry in the system.

In this embodiment, the voltage regulator circuit is configured to maintain the output voltage of the battery block lower than the voltage of a primary power supply such that energy from the battery block is only consumed when a primary power supply is not available.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

**Claims**

1. An electronic system (100) comprising:

   at least one electronic component (104); and
   a battery block (102) configured to provide power to the at least one electronic component (104), wherein the battery block (102) comprises:

   at least one battery cell (110);
   a voltage regulator circuit (112) coupled to the at least one battery cell and configured to maintain an output voltage of the battery block (102) within operating voltage limits of the at least one electronic component (104); and
   a housing configured to house the at least one battery cell (110) and the voltage regulator circuit (112).

2. The electronic system (100) of claim 1, wherein the at least one component (104) is a static random access memory (SRAM) chip.

3. The electronic system (100) of claim 1, wherein an output voltage of the at least one battery cell (110) is outside operating limits of the at least one electronic component (104).

4. The electronic system (100) of claim 1, wherein the at least one battery cell (110) further comprises one of two lithium sulfuryl chloride double D cells and four lithium manganese dioxide single D cells.

5. The electronic system (100) of claim 1, wherein the voltage regulator circuit (112) is radiation hardened to pass one or more performance tests.

6. The electronic system (100) of claim 1, wherein the electronic system (100) is a missile guidance computer.

7. The electronic system (100) of claim 1, wherein the voltage regulator circuit (112) includes a low dropout voltage regulator (114).

8. The electronic system (100) of claim 7, wherein the voltage regulator (114) is further adapted to have a low quiescent current.

9. The electronic system (100) of claim 1, further comprising a primary power supply (106), wherein the battery block (102) is adapted to provide back-up power when the primary power supply (106) is unavailable.

10. The electronic system (100) of claim 9, further comprising a switch (111) configured to conduct current from the battery block (102) to the at least one component (104) when the output voltage of the primary power supply (106) drops below a threshold voltage value.

FIG. 1

FIG. 2

FIG. 3

FIG. 4

500

```
┌─────────────────────┐
│   Place battery cells│  502
│   into battery block's│
│       housing        │
└─────────────────────┘
           │
           ▼
┌─────────────────────┐
│   Radiation harden a │  504
│   voltage regulator  │
│       circuit        │
└─────────────────────┘
           │
           ▼
┌─────────────────────┐
│  Place voltage regulator│  506
│   circuit into battery │
│     block's housing    │
└─────────────────────┘
           │
           ▼
┌─────────────────────┐
│   Couple battery cells│  508
│   to voltage regulator│
│       circuit        │
└─────────────────────┘
```

FIG. 5

**European Patent Office**

## EUROPEAN SEARCH REPORT

Application Number

EP 07 10 7695

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 510 400 A (KITELEY KENNETH J [US]) 9 April 1985 (1985-04-09) * the whole document * | 1-10 | INV. H01M2/34 H01M6/50 H01M10/46 |
| X | US 6 037 750 A (VON NOVAK WILLIAM [US]) 14 March 2000 (2000-03-14) * claims 1,11,19 * | 1-10 | |
| X | US 5 731 686 A (MALHI SATWINDER [US]) 24 March 1998 (1998-03-24) * the whole document * | 1-10 | |
| X | US 5 675 232 A (KOENCK STEVEN E [US]) 7 October 1997 (1997-10-07) * claim 1 * | 1-10 | |
| | | | TECHNICAL FIELDS SEARCHED (IPC) |
| | | | H01M |

The present search report has been drawn up for all claims

| Place of search | Date of completion of the search | Examiner |
|---|---|---|
| Munich | 3 December 2007 | Cappadonia, Marcella |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 7695

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2007

| Patent document cited in search report | | Publication date | Patent family member(s) | | Publication date |
|---|---|---|---|---|---|
| US 4510400 | A | 09-04-1985 | NONE | | |
| US 6037750 | A | 14-03-2000 | AU | 6049699 A | 03-04-2000 |
| | | | WO | 0016462 A1 | 23-03-2000 |
| US 5731686 | A | 24-03-1998 | EP | 0644642 A2 | 22-03-1995 |
| US 5675232 | A | 07-10-1997 | NONE | | |

EPO FORM P0459

For more details about this annex : see Official Journal of the European Patent Office, No. 12/82